# EUROPÄISCHE PATENTSCHRIFT

(11) **EP 2 364 784 B1**
(45) Veröffentlichungstag und Bekanntmachung des Hinweises auf die Patenterteilung: **18.05.2016**
(21) Anmeldenummer: 11000631.9
(22) Anmeldetag: 26.01.2011
(51) Int. Cl.: B05B 1/26, B05B 1/30, F16K 1/42, F16K 25/00

(54) **Düse eines Ventils**
Nozzle for a valve
Buse de soupape

(30) Priorität: 01.02.2010 DE 102010006604
(43) Veröffentlichungstag der Anmeldung: 14.09.2011
(73) Patentinhaber: Firma SVM Schultz Verwaltungs-GmbH & Co. KG, 87700 Memmingen (DE)
(72) Erfinder: Weiß, Johann, 88239 Wangen (DE); Wassermann, Ralph, 87700 Memmingen (DE); Wiedemann, Peter, 87757 Derndorf (DE)
(74) Vertreter: Schulz, Manfred

(56) Entgegenhaltungen:
- DE-A1- 2 122 558
- DE-A1-102007 006 934
- DE-A1-102007 009 168
- DE-A1-102008 000 505
- GB-A- 2 327 740

## Beschreibung

Die Erfindung betrifft eine Düse, insbesondere eine Düse eines Ventils. Die Düse weist eine von einem Nippel verschließbare oder freigebbare Düsenöffnung auf, wobei die Düsenöffnung von einer Düsenkante begrenzt ist. Die Düsenkante wirkt mit dem Nippel zusammen.

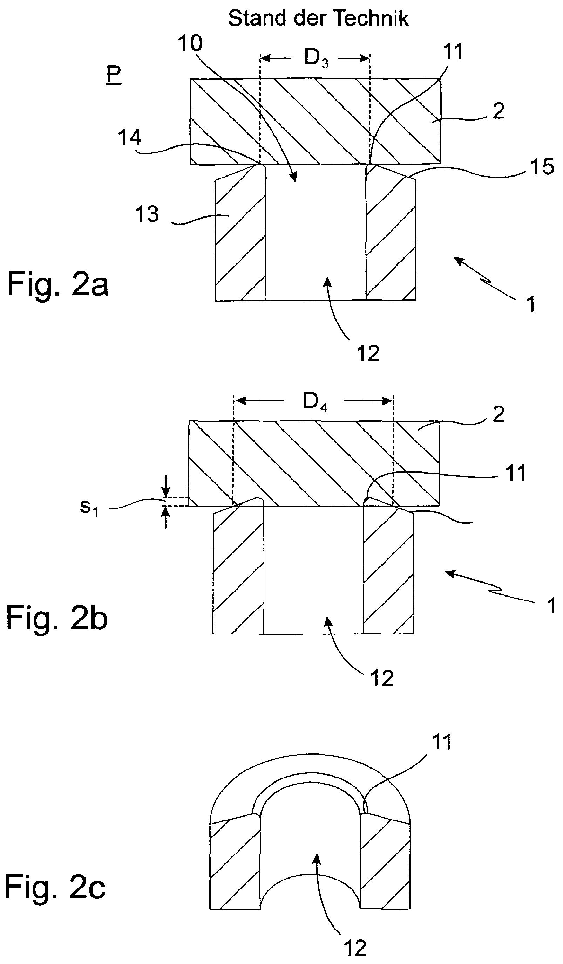

Eingangs beschriebene Düsen sind in der Technik hinlänglich bekannt. Beispielhaft wird zum Beispiel hierzu auch auf die Zeichnung, hier insbesondere Figur 2a, 2b und 2c verwiesen, bei welcher eine Düse nach dem Stand der Technik gezeigt ist. Die Düse ist dabei gebildet von einer Düsenbohrung, die in einem Düsenkörper angeordnet ist. Dabei beschränkt sich die Erfindung nicht darauf, dass eine Bohrung, also eine zerspanende Bearbeitung in Düsenkörper eingebracht worden ist, die Düsenbohrung kann zum Beispiel auch bei einer rohrartigen Profilware vorhanden sein. Das dem Nippel zugewandte Ende der Düsenbohrung beschreibt die Düsenöffnung. Die Düsenöffnung wird begrenzt von der Düsenkante, die mit dem Nippel, in der Regel ein Elastomer oder einen ähnlich elastischen Material, abdichtend zusammenwirkt. Dabei ist zu beachten, dass die Düsenkante nicht nur als linienartiges Element zu verstehen ist, sondern die Düsenkante auch eine gewisse Ausdehnung aufweisen kann, also zum Beispiel ringartig beziehungsweise wulstartig ausgebildet ist, wobei der Begriff Düsenkante insofern auch eine entsprechende (plane oder gewölbte) Fläche/n umfasst.

Die Anordnung ist oftmals so gewählt, dass die Düse, insbesondere der Düsenkörper, im Ventil feststehend ausgebildet ist und der Nippel über einen entsprechenden Aktuator, zum Beispiel einem Anstellelement, einer Ankerstange, einem Anker oder ähnlichem, auf die Düsenkante geschoben beziehungsweise gedrückt wird.

Wie insbesondere in Figur 2a gut zu erkennen ist, besitzen die Düsen eine konusartige Ausgestaltung, derart, dass sich die Düsenkante an einem (endseitigen) Wulst an der Düsenöffnung befindet, der dann in einen konusartigen oder kegelstumpfartigen Bereich zur Seite hin abfällt.

Es ist eine normale Erscheinung des eingesetzten Materials des Nippels, dass dieser verschleißt. Figur 2a zeigt einen noch relativ neuen Nippel im Einsatz, ein bereits etwas gealterter Nippel ist in Figur 2b gezeigt. Üblicherweise befindet sich der Nippel auf der Seite der Düse, an welcher auch der Druck an der Düse anliegt. Der auf der Düsenöffnung aufsitzende Nippel beschreibt auf dem seitlichen Konus der Düse einen Begrenzungsrand. Dieser Begrenzungsrand umschließt die Dichtfläche an der Düse. Aus dem Produkt der Dichtfläche und dem an den Nippel anliegenden Druck, ergibt sich die Haltekraft. Vergleicht man nun Figur 2a mit Figur 2b so ergibt sich, dass mit zunehmendem Alter des Nippels dieser weiter auf den Konus der Düse aufgeschoben wird und sich so der Begrenzungsrand aufweitet und somit sich auch die Dichtfläche und hieraus resultierend die notwendige Haltekraft vergrößert.

Ist die Düse in ein Elektromagnetventil eingesetzt, führt dies zu einem größeren Ankerhub, der verbunden ist mit einer größeren Stromaufnahme und dem Risiko, dass die Leckage steigt. Hieraus ergibt sich eine Begrenzung für die Lebensdauer der Ventile, insbesondere der Elektromagnetventile, die mit entsprechenden Düsen ausgestattet sind.

Das Dokument GB 2 327 740 A offenbart einen Ventilverschlussmechanismus, bei welchem eine Dichtungsscheibe gegen eine Kante auf einem Ventilsitz drückt, wobei die Kante in die Dichtungsscheibe eindringt um eine Dichtung zu erreichen.

Das Dokument DE 2 122 558 A offenbart einen gepanzerten Sitz für Armaturen großer Nennweite mit hoher thermischer Beanspruchung, wobei der Sitz aufgegliedert ist in einen unnachgiebigen Stützsitz, dessen aus sehr hartem Werkstoff bestehende Panzerung in mehrere Einzelflächen untergliedert ist, und einen den Stützsitz geringfügig überragenden nachgiebigen Dichtungssitz, dessen Panzerung aus einem relativ elastischen Werkstoff besteht.

Das Dokument DE 10 2007 006 934 A1 offenbart ein Ventil zum Steuern eines Mediums, insbesondere eines gasförmigen Mediums, mit einem Ventilsitz mit wenigstens einer Durchgangsöffnung, einem bewegbaren Ventilglied, einem Dichtelement und einem Anschlagelement. Das Dichtelement dichtet im geschlossenen Zustand das Ventil zwischen Ventilsitz und Ventilglied ab und erfährt dabei nur eine geringe Verformung.

Das Dokument De 10 2008 000 505 A1 offenbart ein Gasventil zum Zuführen eines gasförmigen Mediums, mit einem Ventilsitz und einem Ventilschließglied mit einem elastischen Dichtelement. Der Ventilsitz umfasst einen Dichtbereich und einen Ablagebereich, wobei im geschlossenen Zustand des Gasventils das elastische Dichtelement am Dichtbereich abdichtet und ein Teil des Dichtelements auf dem Ablagebereich zur Abstützung des Dichtelements abgelegt ist. Der Ablagebereich umfasst eine definierte Feinstrukturierung mit einer Vielzahl von Vertiefungen und einer Vielzahl von durch die Vertiefungen begrenzten Flächenbereichen.

Es ist die Aufgabe der vorliegenden Erfindung mindestens einen der vorgenannten Nachteile des Standes der Technik zu verbessern.

Zur Lösung dieser Aufgabe geht die Erfindung von einer Düse, wie eingangs beschrieben, aus und schlägt vor, dass an der Düse, von der Düsenkante beabstandet, mindestens eine Abstützfläche für den Nippel vorgesehen ist und die Abstützfläche von der Düsenkante durch einen Abstandsbereich beabstandet ist. Der auf der Abstützfläche und der Düsenkante aufliegende Nippel übergreift und überspannt den Abstandsbereich frei, übernimmt also keine abdichtende Funktion, was ansonsten zu einer Erhöhung der Dichtfläche mit den vorgenannten Nachteilen führen würde.

Durch den erfindungsgemäßen Vorschlag wird daher erreicht, dass ein bereits durch eine Vielzahl von Ventilschaltvorgängen etwas gealterter und daher verschlissener Nippel nicht mehr, wie im Stand der Technik, zu einer Erhöhung der Dichtfläche führt, was auch nach dem Stand der Technik gleichzeit mit einer Abstützfunktion einherging, sondern der Nippel kann sich dann auf einer Abstützfläche, die beabstandet von der Düsenkante ist, abstützen, wobei diese zusätzliche Abstützfläche nicht zur Dichtfläche hinzuzählt und daher nicht die Haltekraft (gebildet aus dem Produkt der Dichtfläche mit dem im Ventilraum anliegenden Druck) erhöht.

Ein weiterer überraschender Vorteil liegt bei der Erfindung darin, dass durch die genaue Positionierung der Abstützfläche, bezogen auf die Düsenkante, der Hub des Nippels und damit auch der Hub des den Nippel antreibenden beziehungsweise bewegenden Elementes (zum Beispiel der Ankerstange oder letztlich des Ankers) genauer einstellbar ist und somit auch zum Beispiel bei einem Elektromagneten als Antriebselement für den Nippel, dieser weiter optimiert werden kann. In letzter Konsequenz erreicht man dadurch eine Optimierung des Anzugstromes und somit auch eine Reduktion der Leistungsaufnahme eines solchen Elektromagnetventiles über seine gesamte Lebensdauer, da sich die geometrischen Eigenschaften der Nippellage relativ zur Düse mit zunehmendem Alter des Nippels nur noch geringst, wenn überhaupt, verändern.

In einer bevorzugten Ausgestaltung der Erfindung, die den Gegenstand des Hauptanspruchs weiterbildet, die aber auch im Zusammenhang mit sämtlichen, einzelnen oder Kombinationen der weiteren Ausführungsformen realisierbar ist, ist vorgesehen, dass die Abstützfläche gegenüber der Düsenkante in Richtung der Zustellbewegung des Nippels auf die Düsenöffnung zurücksteht. Die Zustellbewegung des Nippels auf die Düsenöffnung erfolgt in der Regel auch parallel zur Längserstreckung der Düsenbohrung. Die Anordnung ist daher so gewählt, dass zunächst der Nippel auf der durch die Düsenkante definierten Dichtebene aufliegt und die Düse abdichtet. Um eindeutig sicherzustellen, dass zunächst der Nippel auf der Düsenkante beziehungsweise Dichtebene aufsitzt, steht die Abstützfläche etwas zurück. Der Nippel ist aus einem elastischen Material, bevorzugt einem Elastomer gebildet. Die Zustellbewegung des Nippels der Düsenöffnung erfolgt mit einer entsprechenden Kraft, aufgrund dessen das elastische Material des Nippels komprimiert wird. Dabei ist der entstehende Flächendruck im Nippel verhältnismäßig groß, da die Fläche verhältnismäßig klein ist und auch so eine verhältnismäßig kleine, gleichbleibende Dichtfläche definieren soll. Diese verhältnismäßig große Druckbeanspruchung, die immer im gleichen Bereich des Nippels erfolgt, führt zu einem entsprechend Ermüden oder Verschleiß beziehungsweise Altern des Nippels. Für die Abstützaufgabe des Nippels an der Düse sind die von der Düsenkante distanzierte oder distanzierten Abstützflächen vorgesehen, die geschickterweise deutlich größer ausgebildet sind, als die Fläche an dem Dichtring beziehungsweise Düsenkante. Insofern wirkt die Abstützfläche dann auch als Anschlag für die Nippelbewegung und das elastische Material des Nippels erfährt im Bereich der Düsenkante auch nur eine begrenzte Komprimierung. Insofern wird in diesem verhältnismäßig stark beanspruchten Bereich des Nippels das Material geschont und entlastet, was sich günstig für Dauerhaftigkeit und Lebensdauer des gesamten Ventils auswirkt.

Erfindungsgemäß ist vorgesehen, dass der insbesondere durch eine Vielzahl von Ventilschaltvorgängen gealterte Nippel auf der Abstützfläche aufliegt. Gemäß einer Auslegung der Erfindung ist es möglich, dass der Nippel nicht gleich zu Beginn des Einsatzes des entsprechend ausgestatteten Ventils auch auf der Abstützfläche aufliegt, wenn der Nippel auf der Düsenkante aufliegt. Insofern umfasst die Erfindung auch Lösungen, bei welchen zunächst zu Beginn der Benutzung der Düse das Nippelmaterial noch eine ausreichende Eigenelastizität aufweist und daher der Nippel nur an der Düsenkante der Düse anliegt. Im weiteren Verlauf, bei entsprechender Alterung des Nippels allerdings, tritt dann die Abstützfläche ein, um eine zusätzliche Abstützmöglichkeit zu geben. Die erfindungsgemäße Konstruktion ist alternativ daher auch so ausgebildet, dass der Einsatz der Abstützflächen nicht gleich zu Beginn des Einsatzes des Ventiles wirksam ist, sondern erst zu einem späteren Zeitpunkt erfolgt. Dann allerdings ist die erfindungsgemäße Düse bereits so ausgestattet, um in ausreichender Weise den Nippel zu entlasten und auch bei einer großen Anzahl von Ventilschaltvorgängen immer noch eine ausreichende Leckagesicherheit bei geringen Halteströmen zur Verfügung zu stellen. Die eingangs gestellte Aufgabe wird durch die beschriebene Ausführungsform ebenfalls gelöst und bildet diesen sowie die weiteren Ausführungsformen weiter.

Für die Ausgestaltung und auch Anordnung der erfindungsgemäß vorgeschlagenen Abstützfläche, sieht die Erfindung mehrere, den Hauptgegenstand und die weiteren Varianten weiterbildende, Möglichkeiten vor. Zuerst ist in einer erfindungsgemäßen Variante die Erfindung so ausgestaltet, dass die Abstützfläche, die Düsenöffnung (zum Beispiel ringförmig) umgibt. Es ist aber auch möglich, dass nicht nur eine Abstützfläche, sondern eine Vielzahl von Abstützflächen, erfindungsgemäß vorgesehen sind, wobei die einzelnen Abstützflächen (Segmente) die Düsenöffnung ringförmig umgeben. So ist zum Beispiel an dem Düsenkörper im Bereich der Düse eine Vielzahl von einzelnen Erhebungen vorgesehen, die bevorzugter Weise von einem Ausgleichskanal jeweils voneinander getrennt sind. Durch diesen Vorschlag ergibt es sich in geschickter Weise, die Abstützfunktion des Nippels an der Düse komplett von der Düsenkante (und somit von der Dichtfunktion) weg zu verlagern und auch auf eine sehr viel größere Abstütz(gesamt)fläche zu verteilen, was die Materialbeanspruchung des Nippels erheblich positiv beeinflusst.

Dabei umfasst die Erfindung nicht nur Lösungen, bei welchen die Abstützflächen um die Düsenöffnung herum angeordnet sind, die Erfindung umfasst auch Lösungen, bei welchen die Düsenkante die Abstützfläche umgibt, also die Abstützfläche zum Beispiel an in der Düse beziehungsweise Düsenöffnung (zum Beispiel konzentrisch oder koaxial) angeordnet ist. Auch ein solcher Vorschlag führt zu einer Entlastung des Nippelmaterials im Bereich der Düsenkanten und bildet die zuvor beschriebene Ausführungsformen beziehungsweise Varianten weiter und dient in diesem Sinne auch der Lösung der eingangs gestellten Aufgabe der Erfindung.

Es ist günstig, wenn die Abstützfläche parallel oder im Wesentlichen parallel zur von der Düsenkante bestimmten Dichtebene ist. Der Vorteil der Erfindung liegt darin, dass eine Trennung der Abdichtfunktion der Düse und der Abstützfunktion des Nippels auf der Düse vorgesehen ist. Für die Abstützfunktion sind eine oder mehrere von der Düsenkante getrennte Abstützflächen vorgesehen. Gemäß einer erfindungsgemäßen Alternative ist vorgesehen, dass der Nippel gegenüber der Dichtebene geneigte, mit entsprechend geneigten Abstützflächen zusammenwirkende Nippelbereiche aufweist, um ein zuverlässiges Abstützen zu erreichen. Für die Herstellung des Nippels aber einfacher ist es, wenn die der Düse zugewandte Seite des Nippels in sich eben ist und der Nippel satt und vollflächig auf der oder den Abstützflächen aufliegt. Demzufolge dient auch die vorher beschriebene Variante der Weiterbildung der vorher beschriebenen Lösungen und dient ebenfalls einzeln oder in Kombination mit einer oder mehreren vorher beschriebenen Varianten der Lösung der Aufgabe der Erfindung.

Ein Vorteil der gleichartigen Orientierung der Abstützflächen einerseits und der mit den Abstützflächen zusammenwirkenden Nippelbereichen andererseits ist, dass damit auch bei einem abgestuften Nippel eine eindeutige Endlage des Nippels auf der Düsenkante besteht und so das Eintauchen der Düse in das Nippelmaterial der axialen Lage nach (bezogen auf die Düsenbohrung) begrenzt ist. Diese Lage kann daher entsprechend optimiert werden, der hier notwendige Hub limitiert werden.

Eine andere erfindungsgemäße Variante sieht vor, dass ein Ring oder Kranz einzelner Abstützflächen vorgesehen ist, die die Düsenöffnung ringförmig umgeben. Diese einzelnen Abstützflächen sind jeweils erfindungsgemäß parallel oder im Wesentlichen parallel zur von der Düsenkante bestimmten Dichtebene ausgerichtet. Alternativ ist es möglich, dass die einzelnen Abstützflächen (leicht) abgeschrägt, in der Gesamtansicht insgesamt konusartig (innen in der Düsenöffnung höher, nach Außen hin abfallend) ausgebildet sind. Es ergibt sich dann, dass die einzelnen Normalen der verschiedenen Abstützflächen zueinander nicht parallel sind, sondern jeweils im Raum anders orientiert sind und, in einer bevorzugten Variante der Erfindung, mit der Flächennormalen der von der Düsenkante bestimmten Dichtebene einen Winkel von 0° bis 10° einschließen. Gemäß einer erfindungsgemäßen Alternative ist vorgesehen, dass die Abstützfläche in sich nicht eben, sondern gewölbt ist und zum Beispiel ein Teil oder ein Segment eines Konus oder Kegelstumpfes ist. Die zuvor beschriebene Ausführungsform bildet ebenfalls den Gegenstand des Hauptanspruchs sowie der vorher beschriebenen Varianten und Ausgestaltungen weiter und dient so auch der Lösung der eingangs gestellten Aufgabe.

In einer bevorzugten Ausgestaltung der Erfindung ist vorgesehen, dass zwischen den einzelnen Abstützflächen je ein Ausgleichskanal vorgesehen ist. Bei dieser erfindungsgemäßen Variante befinden sich die einzelnen Abstützflächen um die Düsenöffnung herum. Von der Düsenkante nach Außen ergibt sich folgende Abfolge der Bauelemente:
Zunächst schließt sich an die Düsenkante ein Abstandsbereich an. Dieser ist ringnutartig ausgebildet und bewirkt, dass in diesem Bereich der Nippel nicht anliegt, sondern auch in der Schließposition (Nippel liegt abdichtend auf der Düsenkante auf) frei also unverdeckt ist. In diesem Bereich kann auch der Umgebungsdruck des Ventilraumes wirken.

Nach Außen hieran anschließend kommt dann die Abstützfläche/n, die zum Beispiel ringartig oder kranzartig die Düse umgibt. Für eine zuverlässige Hinterlüftung gerade im rinnen- oder nutartigen Abstandsbereich ist es dann günstig, die einzelnen Abstützflächen durch, zum Beispiel bezüglich der Mittelachse der Düsenbohrung, radial verlaufenden Ausgleichskanäle zu trennen, um auch im geschlossenen Zustand der Düse eine Hinterlüftung sicherzustellen. Die zuvor beschriebene Ausführungsform ist selbstverständlich auch im Zusammenhang mit sämtlichen oder einzelnen der beschriebenen Ausführungsformen realisierbar.

Ein wesentlicher Vorteil der Erfindung liegt darin, dass die Fläche beziehungsweise Gesamtfläche der Abstützfläche erheblich größer ausbildbar ist, wie die Fläche der Düsenkante, auf welcher der Nippel abdichtend an der Düse aufliegt. So ist zum Beispiel in der erfindungsgemäßen Variante gefunden worden, dass die Fläche beziehungsweise Gesamtfläche der Abstützfläche/n mindestens doppelt so groß ist, wie die Fläche der Düsenkante. Bevorzugt ist hierbei eine Grenze von mindestens dreifach, insbesondere von mindestens fünffach, ebenfalls gefunden worden.

Es ist ein wesentlicher Vorzug der Erfindung, dass die Abstützfläche anschlagartig für den Nippel wirken kann und so die Fläche beziehungsweise Gesamtfläche der Abstützfläche/n im Wesentlichen unabhängig von der Düsenfläche ausbildbar ist und entsprechend optimierbar ist. So ist zum Beispiel gefunden worden, dass es sehr günstig, wenn die Fläche beziehungsweise Gesamtfläche der Abstützfläche/n mindestens die Hälfte der Düsenfläche beträgt. Die Düsenfläche ist dabei die von dem Nippel gegen den Umgebungsdruck abgedichtete Fläche an der Düsenkante. Der erfindungsgemäße Effekt tritt bereits bei 50 % der Düsenfläche ein, er kann aber entsprechend größer sein, zum Beispiel kann das Verhältnis zwischen der Fläche beziehungsweise Gesamtfläche der Abstützfläche/n zur Düsenfläche auch mehr als 100 %, 150 %, 250 % oder 500 % betragen. Die zuvor beschriebene Ausführungsform (Variante) bildet den Gegenstand des Hauptanspruchs sowie der vorhergehenden Unteransprüche beziehungsweise Varianten und Ausführungsformen weiter und dient in diesem Sinne auch der Lösung der eingangs gestellten Aufgabe in gleicher Weise.

Die Erfindung betrifft nicht nur die Düse, wie eingangs beschrieben, sondern erstreckt sich gleichwohl auch auf ein Ventil, insbesondere ein Elektromagnetventil, welches mit einer Düse, wie beschrieben, ausgestattet ist. Der Aufbau in dem Ventil ist dabei derart, dass ein Ventilraum besteht, in welchem einerseits die Düse und andererseits der Nippel angeordnet sind. Die Funktion erfolgt durch eine Relativbewegung von Nippel und Düse zueinander, wobei üblicherweise die Düse beziehungsweise Düsenöffnung feststehend ist und der Nippel gegen die Düse angestellt wird. Grundsätzlich ist es aber auch erfindungsgemäß möglich, dieses kinematische Konzept umzudrehen, derart, dass der Nippel feststehend ist und sich die Düse bewegt.

Üblicherweise ist der Nippel mit einer Betätigungseinrichtung verbunden. Dieser, gegebenenfalls von dem zu steuernden (zum Beispiel flüssigen oder gasförmigen) Medium getrennte oder durchströmte, Apparat ist zum Beispiel ein Elektromagnet, dessen elektromagnetische Kräfte auf einen beweglich gelagerten Anker wirken, wenn elektrischer Strom durch die Magnetspule fließt. Daraufhin bewegen sich der Anker und die mit dem Anker verbundene Ankerstange, an welcher der Nippel angeordnet ist oder von diesem betätigt wird. Durch eine erheblich verbesserte Ausgestaltung der Düse gemäß der Erfindung, erreicht ein mit dieser Düse ausgebildetes Ventil eine erheblich höhere Lebensdauer und somit eine erheblich höher Effizienz. Der erfindungsgemäße Vorschlag ist daher in gleicher Weise auch auf ein Ventil, insbesondere ein Elektromagnetventil, zu lesen.

In der Zeichnung ist die Erfindung insbesondere in einem Ausführungsbeispiel schematisch dargestellt.

Es zeigen:
- Fig. 1a, 1b: in einer Seitenansicht das Zusammenwirken des Nippels mit der erfindungsgemäßen Düse in zweiverschiedenen Stellungen
- Fig. 1c: in dreidimensionaler Ansicht (geschnitten) die erfindungsgemäße Düse
- Fig. 1d: ein Detail nach Fig. 1b
- Fig. 2a, 2b: in einer Seitenansicht das Zusammenwirken des Nippels mit einer Düse nach dem Stand der Technik in zwei verschiedenen Stellungen
- Fig. 2c: eine dreidimensionale Ansicht (teilweise geschnitten) einer Düse nach dem Stand der Technik

In den Figuren sind gleiche oder einander entsprechende Elemente jeweils mit den gleichen Bezugszeichen bezeichnet und werden daher, sofern nicht zweckmäßig, nicht erneut beschrieben.

In Fig. 2a, 2b und 2c ist die Lösung nach dem Stand der Technik schematisch gezeigt. Die Düse 1 besteht aus einem Düsenkörper 13, der üblicherweise rotationssymmetrisch oder zylinderartig ist und eine Düsenbohrung 12 aufweist. Am oberen Ende wird die Düsenbohrung 12 durch die Düsenöffnung 10 abgeschlossen, diese Düsenöffnung 10 wird von dem Nippel 2 entsprechend der Relativstellung von Nippel 2 zur Düse 1 verschlossen oder freigegeben.

Hierzu wird üblicherweise der Nippel 2 mit einer entsprechenden Haltekraft auf den oberen Rand 14 gedrückt. Am oberen Rand 14 ist dann auch die Düsenkante 11 vorgesehen. In Fig. 2a, 2b, 2c ist gut die konische Ausgestaltung der Düse 1 zu erkennen, der Nippel 2 liegt nur an dem der Düsenbohrung 12 zugewandten Düsenkante 11 auf.

In Fig. 2a ist ein verhältnismäßig neuer Nippel 2 gezeigt, wie dieser auf dem oberen Rand 14 der Düse 1 aufliegt. Der Nippel 2 dichtet die Düse 1 an der Düsenkante 11 ab, die Düsenfläche ist mit D3 gekennzeichnet.

Altert nun der Nippel 2 aufgrund einer Vielzahl von Ventilschaltvorgängen, so zeigt sich eine Situation wie in Fig. 2b. Der Nippel 2 wird weiter auf den Konus 15 aufgeschoben, der zusätzliche Hub ist mit s1 in Fig. 2b gekennzeichnet. Hieraus ergibt sich, aufgrund des Konus 15, eine erhebliche Vergrößerung der Düsenfläche D4, die einhergeht mit einer entsprechend größeren notwendigen Haltekraft, da die Düse derart im Ventilraum angeordnet ist, dass der Druck p die Außenseite des Düsenkörpers 13 und auch den Nippel 2 umgibt und so auch den Nippel auf die Düsenkante 11 drückt.

Nach der Lösung im Stand der Technik werden weiter außenliegende Bereiche des Konus 15 ebenfalls zur Abstützfunktion des Nippels 2 auf der Düse 1 eingesetzt, dies geht einher mit einer erheblichen Hubvergrößerung s1 einerseits und andererseits mit einer entsprechenden Erhöhung der Düsenfläche und der daraus resultieren größeren Haltekräfte beziehungsweise Rückzugskräfte des Nippels 2 von der Öffnung 10 der Düse 1.

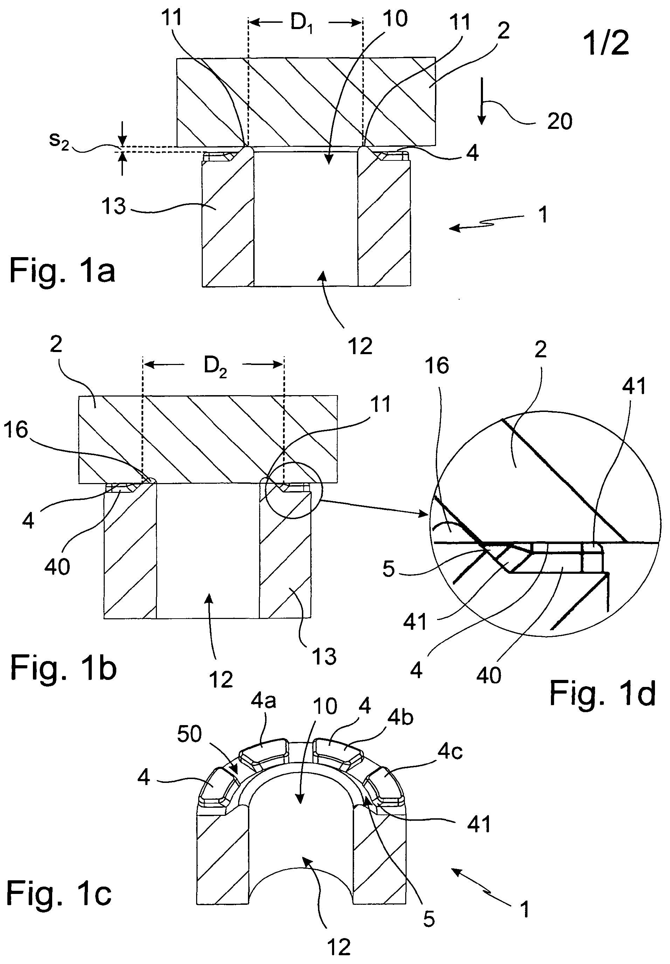

Der erfindungsgemäße Aufbau der Düse 1 ergibt sich aus Fig. 1a, 1b, 1c und 1d. Der Düsenkörper 13 besitzt eine Düsenbohrung 12, die dem Nippel 2 zugewandt in einer Düsenöffnung 10 mündet. Es ist eine endseitige Düsenkante 11 vorgesehen. Der Begrenzungsrand des Nippels 2 auf der Düsenkante 11 umschließt die Düsenfläche D1. In Fig. 1a ist ein verhältnismäßig ungebrauchter, neuwertiger Nippel 2 im Einsatz gezeigt, der die Düsenöffnung 10 umgebende Wulst dringt nur unmerklich in das elastische Nippelmaterial ein. Die Zustellbewegung des Nippels 2 in Richtung der Düse 1 ist mit dem Pfeil 20 gekennzeichnet. Seitlich nach Außen (bezogen auf die Düsenöffnung 10) schließt sich an der Düsenkante 11 außen eine Mehrzahl von Abstützflächen 4 an. Diese Abstützflächen 4 sind um den Abstand s2 gegenüber der Düsenkante 11 zurückgesetzt. Die Funktion dieser Abstützfläche 4 ergibt sich insbesondere aus Fig. 1b, bei welcher der bereits gealterte Nippel 2 im Einsatz gezeigt ist. Der Ringwulst 16, welcher die Düsenkante 11 trägt, taucht auch hier etwas in das Material des Nippels 2 ein. Allerdings ist der in Fig. 1a noch gezeigte Spalt s2 in Fig. 1b geschlossen, das heißt, weitere Bereiche des Nippels 2 liegen jetzt auf den Abstützflächen 4, die den Ringwulst 16 umgeben, auf und bilden dort einen Anschlag. Sie beschränken somit den maximalen Hub des Nippels 2 in Richtung der Düse 1. Zwar ist auch in der Variante nach der Erfindung (vgl. Fig. 1b) die Düse konusartig ausgebildet, allerdings ist die Vergrößerung der Düsenfläche D2 sehr viel geringer, wie in dem Beispiel nach Fig. 2b und aufgrund der Anschlagfunktion der Abstützflächen 4 hierauf auch begrenzt. Im Ergebnis ergibt sich, dass die Düsenfläche im Vergleich zwischen Fig. 1a und 1b nur marginal größer wird und sich daher die Haltekräfte bei konstantem Anwendungsdruck kaum vergrößern.

Die Anordnungen der einzelnen Abstützflächen 4, 4a, 4b und 4c um die Düsenöffnung 10 herum, ergibt sich insbesondere aus Fig. 1c. Zwischen der Ringwulst 16, welche in den Nippel 2 einzutauchen vermag und den einzelnen, ring- oder kranzartig angeordneten Abstützflächen 4, ist ein Abstandsbereich 5 vorgesehen. Auch der gealterte Nippel 2 (vergleiche Fig. 15) liegt nicht im Abstandsbereich 5 an dem Konus an! Das bedeutet, die verhältnismäßig große Fläche der Abstützflächen 4, 4a, 4b, 4c haben keine abdichtende Funktion, sondern bilden hier nur einen Anschlag für den Nippel 2. Grundsätzlich ist es dabei möglich, dass diese Abstützfläche 4 (eine oder mehrere) verhältnismäßig groß ausgebildet werden kann, wodurch sich daraus der Flächendruck auf das Nippelmaterial 2 entsprechend reduziert, was ebenfalls günstig für eine hohe Lebensdauer des Nippels 2 und der gesamten Anordnung (der Düse beziehungsweise dem mit der Düse ausgestatteten Ventil) ist.

Geschickterweise ist dabei zwischen den einzelnen Abstandsflächen 4, 4a, 4b, 4c je ein Ausgleichskanal 50 vorgesehen, der mit dem ringnutartigen oder kanalartigen Abstandsbereich 5 in Verbindung steht und so jederzeit einen Druckausgleich, also eine Hinterlüftung, bewirkt.

In Fig. 1d ist das Detail des Aufliegens des Nippels 2 auf die Abstützfläche 4 vergrößert herausgezeichnet. Die Abstützfläche 4 ist dabei die obere Fläche der Erhebung 40, die auf dem seitlichen Rand der Düse 1 angeordnet ist. Um Scharfkantigkeit an der Erhebung 40 beziehungsweise Abstützfläche 4 zu vermeiden, sind diverse seitliche Abschrägungen 41 vorgesehen. Gut zu erkennen ist der grabenartig ausgestaltete Abstandsbereich 5 zwischen dem konisch abfallenden, inneren Bereich der Düse 1 und der Erhebung 40 mit der Abstützfläche 4.

Erfindungsgemäß wird der Effekt bereits mit einer Abstützfläche 4 erreicht. Wie in dem Ausführungsbeispiel gezeigt, ist es aber auch günstig, wenn eine Vielzahl von einzelnen Abstützflächen vorgesehen sind, die die Düsenöffnung 10 umgeben. Für eine Hinterlüftung des Abstandsbereiches 5 ist in dem hier gezeigten Ausführungsbeispiel eine Vielzahl von Ausgleichskanälen 50 vorgesehen. Es ist aber auch möglich, radial, bezogen auf die Mittelachse der Düsenbohrung 12, verlaufende Bohrungen in der Erhebung, die die Abstützfläche 4 bildet, vorzusehen und so für den Ausgleichskanal zur Hinterlüftung des Abstandsbereiches 5 zur Verfügung zu stellen. Die Abstützfläche 4 ist dann durchgehend ringförmig.
Die erfindungsgemäße Düse ist aus den verschiedensten Materialien, entsprechend dem Anwendungsbereich, herstellbar. Hierzu zählt zum Beispiel ein Kunststoffmaterial, das sich zum Beispiel auch in einem Spritzgussteil verarbeiten lässt. Es ist aber auch möglich, die Düse 1 aus Metall herzustellen, wobei dann gegebenenfalls auch spanabhebende Bearbeitungsschritte neben formgebenden Bearbeitungsschritten (formen oder senken) vorgesehen sind.

## Patentansprüche

1. Düse, insbesondere eines Ventils, mit einem Nippel, wobei die Düse eine, von dem Nippel (2) verschließbare oder freigebbare Düsenöffnung (10) aufweist, und die Düsenöffnung (10) von einer Düsenkante (11) begrenzt ist, die mit dem Nippel zusammenzuwirken vermag, und an der Düse (1), von der Düsenkante (11) beabstandet, mindestens eine Abstützfläche (4) für den Nippel (2) vorgesehen ist und die Abstützfläche (4) von der Düsenkante (11) durch einen Abstandsbereich (5) beabstandet ist und der auf der Abstützfläche (4) und der Düsenkante (11) aufliegende Nippel (2) den Abstandsbereich (5) frei übergreift, **dadurch gekennzeichnet, dass** die Abstützfläche/n (4) in sich nicht eben, sondern gewölbt ist/sind und ein Teil oder ein Segment eines Konus oder Kegelstumpfes ist/sind oder der Nippel (2) gegenüber einer Flächennormalen einer von der Düsenkante (11) bestimmten Dichtebene geneigte, mit entsprechend geneigten Abstützflächen (4) zusammenwirkende Nippelbereiche aufweist und der insbesondere durch eine Vielzahl von Ventilschaltvorgängen gealterte Nippel (2) auf der/den Abstützfläche/n (4) aufliegt.

2. Düse nach Anspruch 1, **dadurch gekennzeichnet, dass** in Richtung der Zustellbewegung (20) des Nippels (2) auf die Düsenöffnung (10) die Abstützfläche (4) gegenüber der Düsenkante (11) zurücksteht.

3. Düse nach einem der vorhergehenden Ansprüche, **dadurch gekennzeichnet, dass** die Abstützfläche (4) die Düsenöffnung (10) umgibt.

4. Düse nach einem der vorhergehenden Ansprüche, **dadurch gekennzeichnet, dass** eine Mehrzahl von Abstützflächen (4,4a,4b,4c) die Düsenöffnung (10) ringförmig umgibt.

5. Düse nach Anspruch 4, **dadurch gekennzeichnet, dass** die Düsenkante (11) die Abstützfläche (4) umgibt.

6. Düse nach einem der Ansprüche 4 oder 5 sofern die Abstützfläche/n (4) in sich nicht eben, sondern gewölbt ist/sind und ein Teil oder ein Segment eines Konus oder Kegelstumpfes ist/sind, **dadurch gekennzeichnet, dass** die Abstützfläche (4) parallel oder im wesentlichen parallel zur von der Düsenkante (11) bestimmten Dichtebene ist.

7. Düse nach einem der Ansprüche 4 bis 6, **dadurch gekennzeichnet, dass** die einzelnen Abstützflächen (4,4a,4b,4c) ringförmig, konusartig um die Düsenöffnung (10) herum angeordnet sind.

8. Düse nach einem der Ansprüche 4 bis 7 sofern die Abstützfläche/n (4) in sich nicht eben, sondern gewölbt ist/sind und ein Teil oder ein Segment eines Konus oder Kegelstumpfes ist/sind, **dadurch gekennzeichnet, dass** die Normalen der einzelnen Abstützflächen (4,4a,4b,4c) mit der Flächennormale der von der Düsenkante (11) bestimmten Dichtebene einen Winkel von 0° bis 10° einschließen.

9. Düse nach einem der Ansprüche 4 bis 8, **dadurch gekennzeichnet, dass** zwischen den einzelnen Abstützflächen (4,4a,4b,4c) je ein Ausgleichskanal vorgesehen ist.

10. Düse nach einem der Ansprüche 4 bis 9, **dadurch gekennzeichnet, dass** die Fläche, beziehungsweise die Gesamtfläche, der Abstützfläche/n (4,4a,4b,4c) mindestens doppelt so groß ist wie die Fläche der Düsenkante (11).

11. Düse nach einem der Ansprüche 4 bis 10, **dadurch gekennzeichnet, dass** die Fläche, beziehungsweise die Gesamtfläche, der Abstützfläche/n (4,4a,4b,4c) mindestens die Hälfte der Düsenfläche (D1,D2) beträgt.

12. Ventil, insbesondere Elektromagnetventil, mit einer Düse nach einem der vorhergehenden Ansprüche.

## Claims

1. Nozzle, in particular of a valve, with a nipple, wherein the nozzle has a nozzle opening (10) that can be sealed or released by the nipple (2), and the nozzle opening (10) is limited by a nozzle edge (11) being able to interact with the nipple, and at the nozzle (1), spaced from the nozzle edge (11), at least one supporting surface (4) is provided for the nipple (2), and the supporting surface (4) is spaced from the nozzle edge (11) by a distance area (5), and the nipple (2) resting on the supporting surface (4) and the nozzle edge (11) freely bridges the distance area (5), **characterized in that** the supporting area(s) (4) itself/themselves is/are not plane but convex and is/are a part or a section of a cone or truncated cone, or the nipple (2) has nipple areas that are tilted with reference to a surface normal of a sealing plane defined by the nozzle edge (11) and interact with appropriately tilted supporting surfaces (4), and that the nipple (2) aged in particular by a multitude of valve switching processes rests on the supporting surface(s) (4).

2. Nozzle according to claim 1, **characterized in that** in the direction of the feed movement (20) of the nipple (2) towards the nozzle opening (10) the supporting surface (4) is offset with reference to the nozzle edge (11).

3. Nozzle according to one of the preceding claims, **characterized in that** the supporting surface (4) surrounds the nozzle opening (10).

4. Nozzle according to one of the preceding claims, **characterized in that** a multitude of supporting surfaces (4, 4a, 4b, 4c) surrounds the nozzle opening (10) annularly.

5. Nozzle according to claim 4, **characterized in that** the nozzle edge (11) surrounds the supporting surface (4).

6. Nozzle according to one of the claims 4 or 5, as far as the supporting surface(s) (4) itself/themselves is/are not plane but convex, and is/are a part or section of a cone or truncated cone, **characterized in that** the supporting surface (4) is parallel or essentially parallel to the sealing plane defined by the nozzle edge (11).

7. Nozzle according to one of the claims 4 to 6, **characterized in that** the single supporting surfaces (4, 4a, 4b, 4c) are arranged annularly, cone-like around the nozzle opening (10).

8. Nozzle according to one of the claims 4 to 7, as far as the supporting surface(s) (4) itself/themselves is/are not plane but convex, and is/are a part or section of a cone or truncated cone, **characterized in that** the normal of the single supporting surfaces (4, 4a, 4b, 4c) with the surface normal of the sealing plane defined by the nozzle edge (11) form an angle of 0° to 10°.

9. Nozzle according to one of the claims 4 to 8, **characterized in that** between the single supporting surfaces (4, 4a, 4b, 4c) one compensation channel each is provided.

10. Nozzle according to one of the claims 4 to 9, **characterized in that** the surface or the total surface of the supporting surface(s) (4, 4a, 4b, 4c) is at least double the size of the surface of the nozzle edge (11).

11. Nozzle according to one of the claims 4 to 10, **characterized in that** the surface or the total surface of the supporting surface(s) (4, 4a, 4b, 4c) is at least half of the nozzle surface (D1, D2).

12. Valve, in particular electro magnetic valve, with a nozzle according to one of the preceding claims.

## Revendications

1. Buse, en particulier buse de soupape comportant un cache de façon à ce que la buse comporte une ouverture de buse (10) pouvant être fermée ou ouverte par ce cache (2) en étant délimitée par un bord de buse (11) pouvant interagir avec ce cache et de façon à ce qu'il existe au moins une surface d'appui (4) pour le cache (2), séparée du bord de buse (11) et située au niveau de la buse (1) et de façon à ce que la surface d'appui (4) est séparée du bord de buse (11) par une zone de séparation (5) et de façon à ce que le cache (2) s'appuyant sur le bord de buse (11) et sur la surface d'appui (4) couvre sans contact la zone de séparation (5), **caractérisée en ce que** la ou les surface(s) d'appui (4) est(sont) intrinsèquement courbée(s) et forme(nt) une partie ou une section d'un cône ou d'une base de cône ou **en ce que** le cache (2) comporte des zones de cache inclinées par rapport à un plan déterminé par le bord de buse (11) et interagissant avec des surfaces d'appui (4) inclinées de la même façon et **en ce que** le cache (2) en particulier vieilli par de nombreuses commutations de la soupape s'appuie sur la ou les surface(s) d'appui (4).

2. Buse selon la revendication 1, **caractérisée en ce que**,selon la direction d'approchement du cache (2) vers l'ouverture de buse (10), la surface d'appui (4) est située en retrait par rapport au bord de buse (11).

3. Buse selon une des revendications précédentes, **caractérisée en ce que** la surface d'appui (4) entoure l'ouverture de buse (10) .

4. Buse selon une des revendications précédentes, **caractérisée en ce qu'**une multitude de surfaces d'appui (4, 4a, 4b, 4c) entourent l'ouverture de buse (10).

5. Buse selon la revendication 4, **caractérisée en ce que** le bord de buse (11) entoure la surface d'appui (4).

6. Buse selon une des revendications 4 ou 5 dans le cas où la ou les surface(s) d'appui (4) n'est (ne sont) pas intrinsèquement plane(s) mais courbée(s) ou forme(nt) une partie ou un segment d'un cône ou d'une base de cône, **caractérisée en ce que** la surface d'appui (4) s'étend parallèlement ou approximativement parallèlement au plan d'étanchéité déterminé par le bord de buse (11).

7. Buse selon une des revendications 4 à 6, **caractérisée en ce que** les surfaces d'appui individuelles (4, 4A, 4B, 4C) en forme d'anneau et de cône sont situées autour l'ouverture de buse (10).

8. Buse selon une des revendications 4 à 7 dans le cas où la ou les surface(s) d'appui (4) n'est (ne sont) pas intrinsèquement plane(s) mais courbée(s) ou forme(nt) une partie ou un segment d'un cône ou d'une base de cône, **caractérisée en ce que** les normales des surfaces d'appui individuelles (4, 4a, 4b, 4c) forment avec la normale du plan d'étanchéité déterminé par le bord de buse (11) un angle allant de 0° à 10°.

9. Buse selon une des revendications 4 à 8, **caractérisée en ce qu'**un canal d'équilibre est prévu entre chacune des surfaces d'appui individuelles (4, 4a, 4b, 4c);

10. Buse selon une des revendications 4 à 9, **caractérisée en ce que** la surface ou la surface totale de la (des) surface (s) d'appui (4, 4a, 4b, 4c) est au moins deux fois plus grande que la surface du bord de buse (11).

11. Buse selon une des revendications 4 à 10, **caractérisée en ce que** la surface ou la surface totale de la (des) surface (s) d'appui (4, 4a, 4b, 4c) est au moins la moitié de la surface de la buse (D1, D2).

12. Soupape, en particulier soupape électromagnétique comportant une buse selon une des revendications précédentes.
